Europäisches Patentamt

European Patent Office

Office européen des brevets

(19)

(11) **EP 1 542 295 A1**

(12) **EUROPEAN PATENT APPLICATION**
published in accordance with Art. 158(3) EPC

(43) Date of publication:
**15.06.2005 Bulletin 2005/24**

(51) Int Cl.⁷: **H01M 2/16**, D21H 13/08,
D21H 13/26

(21) Application number: **03795296.7**

(22) Date of filing: **05.09.2003**

(86) International application number:
**PCT/JP2003/011354**

(87) International publication number:
**WO 2004/025756 (25.03.2004 Gazette 2004/13)**

(84) Designated Contracting States:
**AT BE BG CH CY CZ DE DK EE ES FI FR GB GR HU IE IT LI LU MC NL PT RO SE SI SK TR**

(30) Priority: **11.09.2002 JP 2002265324**

(71) Applicants:
• **Kuraray Co., Ltd.**
  **Kurashiki-shi, Okayama 710-8622 (JP)**
• **MATSUSHITA ELECTRIC INDUSTRIAL CO., LTD.**
  **Kadoma-shi, Osaka 571-8501 (JP)**

(72) Inventors:
• **KAWAI, Hiroyuki**
  **Osaka-shi, Osaka 530-0001 (JP)**

• **TOYOURA, Hitoshi**
  **Osaka-shi, Osaka 530-0001 (JP)**
• **KATAYAMA, Takashi**
  **Kurashiki-shi, Okayama 710-8622 (JP)**
• **MURATE, Yasunori**
  **Kurashiki-shi, Okayama 713-8103 (JP)**
• **SONETAKA, Tomoyasu**
  **Okayama-shi, Okayama 702-8045 (JP)**
• **NOYA, Shigeto**
  **Neyagawa-shi, Osaka 572-0048 (JP)**
• **MUKAI, Yasuo**
  **Moriguchi-shi, Osaka 570-0004 (JP)**

(74) Representative: **VOSSIUS & PARTNER**
**Siebertstrasse 4**
**81675 München (DE)**

(54) **SEPARATOR FOR ALKALINE BATTERY AND BATTERY USING SAME**

(57)     A separator for alkaline batteries exhibits excellent property for holding the alkaline electrolyte, is not degraded even when the separator is used for alkaline batteries using a positive electrode mix containing an agent having a great oxidizing ability for enhancing the discharging property under a great load, maintains the function as the separator even when the separator is exposed to high temperatures for a long time and can be effectively used for alkaline batteries which are used for portable information instruments requiring the excellent discharging property under a great load such as digital cameras.

The separator for alkaline batteries has a non-woven fiber structural material which comprises a polyamide fiber formed with a polyamide constituted with 60% to 100% by mole of a dicarboxylic acid unit and 40 to 99% by mole of 1,9-nonanediamine unit and a solvent-spun cellulose fiber as the main component fibers, and the ratio of the amounts by mass of the polyamide fiber to the cellulose fiber is 20:80 to 80:20.

Preferably, the polyamide forming the polyamide fiber comprises the 2-methyl-1,8-octanediamine unit in combination with the 1,9-nonanediamine unit, and the ratio of the amounts by mole of the 1,9-nonanediamine unit to the 2-methyl-1,8-octanediamine unit is 99:1 to 40:60.

EP 1 542 295 A1

**Description**

TECHNICAL FIELD

The present invention relates to a separator for alkaline batteries and an alkaline battery using the separator. More particularly, the present invention relates to a separator for alkaline batteries which exhibits an improved discharging property (in particular, an improved discharging property at high temperatures) and an improved discharging property under a great load and an alkaline battery equipped with the separator.

BACKGROUND ART

Recently, portable information instruments requiring the excellent discharging property under a great load such as digital cameras are widely used. When a conventional battery is used for the portable information instruments requiring the discharging property under a great load, the capacity of the battery decreases in a short time since conventional batteries have short lives. The battery must be replaced with a fresh battery every time the capacity of the battery decreases, and it is difficult that the instruments are utilized smoothly. Moreover, since the application and the mode of utilization of batteries diversify, batteries are frequently exposed to high temperatures during storage, during periods without discharge and during periods with discharge (during the use of the instruments). Conventional batteries exhibit rapid deterioration in the discharging property when the batteries are exposed to high temperatures.

As the means for improving the discharging property of alkaline batteries under a great load, it is proposed that an active substance for the positive electrode prepared by adding nickel oxyhydroxide to manganese dioxide is used in an alkaline battery having a positive electrode mix, a negative electrode made of zinc and an alkaline electrolyte (an alkaline aqueous solution) and the proposed means has been used for practical applications (for example, Japanese Patent Application Laid-Open No. Showa 57(1982)-49468).

For improving the discharging property under a great load, the storage property and the resistance to leakage of the liquid, it is proposed that a material prepared by adding polyethylene powder to the combination of manganese dioxide and nickel oxyhydroxide is used as the positive electrode mix (for example, Japanese Patent Application Laid-Open Nos. 2001-32250 and 2001-332249).

In conventional alkali batteries, non-woven fabrics formed by using a synthetic fiber such as a polyvinyl alcohol-based fiber, a polyolefin-based fiber and a polyamide fiber or a mixed fiber obtained by adding a cellulose fiber to the synthetic fiber as the main fiber are used as the separator.

Among the above non-woven fabrics, non-woven fabrics formed by using an aliphatic polyamide fiber such as nylon 6 and nylon 66 have advantages in that the property for holding the electrolyte is excellent and the capacity of discharge is great due to the excellent resistant to alkalis and the hydrophilic property. However, the above non-woven fabrics have a drawback in that, when the fabrics are used as the separator for alkaline batteries, the fabrics tend to be degraded by oxidation with oxygen gas generated during charging due to poor resistance to degradation by oxidation at high temperatures. In particular, the fabrics tend to be degraded more easily by oxidation when the fabrics are used for secondary batteries which are repeatedly charged and discharged at high temperatures.

To improve the resistance of the polyamide fiber to degradation by oxidation, it is proposed that a separator for batteries is formed with a mixture or a composite of a polyamide fiber and a polyolefin fiber (for example, Japanese Patent Application Laid-Open Nos. Showa 55(1980)-25921 and Showa 55(1980)-66864). The degradation by oxidation can be decreased to some degree due to the decease in the content of the polyamide fiber. However, the improvement is not sufficient and the problem is not overcome fundamentally.

It is proposed that a non-woven fabric formed with an aromatic polyamide fiber or an entirely aromatic polyamide fiber in place of the aliphatic polyamide is used for the separator for batteries (for example, Japanese Patent Application Laid-Open Nos. Showa 58(1983)-147956 and Heisei 5(1993)-289054). However, the non-woven fabric constituting this separator for batteries has poor strength since the fiber constituting the separator has a high melting point and exhibits poor adhesion with a thermoplastic binder fiber although the separator exhibits excellent hydrophilic property, resistance to alkalis and resistance to degradation by oxidation.

From the above standpoint, the present inventors have been studying to develop a separator for batteries which exhibits excellent hydrophilic property, resistance to alkalis, property for holding alkaline electrolytes, resistance to degradation by oxidation and adhesion to binder fibers. It was found that a separator for batteries exhibiting the excellent hydrophilic property, resistance to alkalis, property for holding alkaline electrolytes, resistance to degradation by oxidation and adhesion with binder fibers could be obtained when a separator for batteries was formed by using a fiber formed, as the main fiber component, with a polyamide which was synthesized from a dicarboxylic acid component containing 60% by mole or more of an aromatic dicarboxylic acid and a diamine component containing 60% by mole or more of an aliphatic alkylenediamine having 6 to 12 carbon atoms such as 1,9-nonanediamine and 2-methyl-1,8-octanediamine. Patents have been applied based on the above finding (Japanese Patent Application Laid-Open Nos.

Heisei 9(1997)-259856 and 2002-151041).

The present inventors conducted further studies based on the inventions disclosed in Japanese Patent Application Laid-Open Nos. Heisei 9(1997)-259856 and 2002-151041 described above, and it was recognized that, for an alkaline battery using, as the positive electrode mix, manganese dioxide added with an agent having a great oxidizing ability for enhancing the discharging property under a great load such as nickel oxyhydroxide, it was urgently necessary that a separator for alkaline batteries which exhibited more excellent resistance to degradation by oxidation at high temperatures than that of the battery described above, was not degraded by oxidation with nickel oxyhydroxide added to the positive electrode mix even when the separator was exposed to high temperatures for a long time, for example, even when the separator was stored at high temperatures, could maintain a great capacity of the positive electrode (the capacity of the battery) for a long time and, therefore, could maintain the excellent discharging property under a great load, be developed.

The present invention has an object of providing a separator for alkaline batteries which, when the separator is used for an alkaline battery using, as the positive electrode mix, manganese dioxide added with an agent having a great oxidizing ability for enhancing the discharging property under a great load such as nickel oxyhydroxide, is not degraded by oxidation with nickel oxyhydroxide added to the positive electrode mix even when the separator is exposed to high temperatures for a long time, for example, even when the separator is stored at high temperatures, can maintain a great capacity of the positive electrode (the capacity of the battery) for a long time and, therefore, can maintain the excellent discharging property under a great load.

The present invention has a further object of providing an alkaline battery equipped with the separator for alkaline batteries described above.

DISCLOSURE OF THE INVENTION

As the result of intensive studies by the present inventors to achieve the above objects, it was found that, when a specific cellulose fiber, i.e., a solvent-spun cellulose fiber produced by using a spinning solution prepared by dissolving cellulose into a non-reactive solvent, was used in combination with a fiber comprising a polyamide constituted with a dicarboxylic acid unit mainly containing the terephthalic acid unit and a diamine unit mainly containing the 1,9-nonanediamine unit or the 1,9-nonanediamine unit and the 2-methyl-1,8-octanediamine unit, such as the fibers described in Japanese Patent Application Laid-Open Nos. Heisei 9(1997)-259856 and 2002-151041 described above, and a separator for alkaline batteries was formed by using the above fibers as the main component fibers, the obtained separator for batteries showed less degradation of the polyamide fiber in the separator with the positive electrode mix than that in conventional separators for batteries even when the separator is exposed to high temperatures for a long time, for example, even when the separator is stored at high temperatures, and that, due to this effect, the decrease in the capacity of the battery was further suppressed when an alkaline battery was prepared by using the separator for alkaline batteries and the discharging property of the alkaline battery under a great load was further improved.

It was also found by the present inventors that, when the polyamide fiber constituting the separator in the above separator for alkaline batteries was formed with a polyamide having sealed chain ends, the polyamide fiber exhibited further improved oxidation resistance, hydrolysis resistance, water resistance and heat resistance, and the separator for alkaline batteries exhibited further improved oxidation resistance, hydrolysis resistance, water resistance and heat resistance.

It was also found by the present inventors that, when the main component fibers are adhered together using a fiber-shaped binder in the separator for alkaline batteries using the above specific polyamide fiber and a cellulose fiber as the main component fibers, a separator exhibiting excellent strength and property for separation could be obtained. The present invention has been completed based on the above knowledge.

The present invention provides:

    (1) A separator for alkaline batteries (i) which comprises a non-woven fiber structural material comprising a polyamide fiber and a cellulose fiber as main component fibers, wherein

        (ii) the polyamide fiber is a fiber formed with a polyamide constituted with a dicarboxylic acid unit and a diamine unit, the dicarboxylic acid unit comprising 60% by mole or more and 100% by mole or less of a terephthalic acid unit and the diamine unit comprising 40% by mole or more and 99% by mole or less of a 1,9-nonanediamine unit;
        (iii) the cellulose fiber is a solvent-spun cellulose fiber produced by using a spinning solution prepared by dissolving cellulose into a non-reactive solvent; and
        (iv) a ratio of an amount by mass of the polyamide fiber to an amount by mass of the cellulose fiber in the non-woven fiber structural material is in a range of 20:80 to 80:20.

The present invention further provides:

(2) A separator for alkaline batteries described in (1), wherein the polyamide forming the polyamide fiber comprises a 2-methyl-1,8-octanediamine unit in combination with the 1,9-nonanediamine unit, and a ratio of an amount by mole of the 1,9-nonanediamine unit to an amount by mole of the 2-methyl-1,8-octanediamine unit in the polyamide is in a range of 99:1 to 40:60.

The present invention further provides:

(3) A separator for alkaline batteries described in any one of (1) and (2), wherein the polyamide forming the polyamide fiber has a fraction of sealed chain ends of 10% or greater.

The present invention further provides:

(4) A separator for alkaline batteries described in any one of (1) to (3), wherein a size of a single fiber in the polyamide fiber is in a range of 0.01 to 1.0 dtex.

The present invention further provides:

(5) A separator for alkaline batteries described in any one of (1) to (4), wherein the cellulose fiber is a solvent-spun cellulose fiber obtained by dry-wet spinning in water of a spinning solution prepared by dissolving cellulose into an amine oxide.

The present invention further provides:

(6) A separator for alkaline batteries described in any one of (1) to (5), wherein the main component fibers are adhered together with a fiber-shaped binder.

The present invention further provides:

(7) A separator for alkaline batteries described in (6), wherein an amount of the fiber-shaped binder is in a range of 3 to 30% by mass based on a total of an amount by mass of the main component fibers and an amount by mass the fiber-shaped binder.

The present invention further provides:

(8) An alkaline battery which is equipped with a separator for alkaline batteries described in any one of (1) to (7).

## THE MOST PREFERRED EMBODIMENT TO CARRY OUT THE INVENTION

The present invention will described in detail in the following.

The separator for alkaline batteries of the present invention comprises a non-woven fiber structural material comprising a polyamide fiber and a cellulose fiber as main component fibers.

The "non-woven fiber structural material" means a fiber structural material formed not by weaving or knitting the above main component fibers but by adhesion and/or entanglement of the above main component fibers with each other and includes non-woven fabrics having a flat sheet shape, materials having a shape of paper, materials having a shape of a cylinder, materials having a shape of a cylinder with a bottom and non-woven fiber structural materials having other shapes.

The polyamide fiber which is one of the main component fibers constituting the separator for alkaline batteries is formed with a dicarboxylic acid unit and a diamine unit.

It is necessary that the polyamide comprise 60% by mole or more, preferably 75% by mole or more and more preferably 90% by mole or more and 100% by mole or less of the terephthalic acid unit based on the entire amount of the dicarboxylic acid unit constituting the polyamide. When the amount of the terephthalic acid unit in the polyamide is less than 60% by mole, the properties such as the oxidation resistance, the chemical resistance and the heat resistance of the polyamide fiber become inferior and such an amount is not preferable.

The polyamide forming the polyamide fiber may comprise other dicarboxylic acid units in combination with the terephthalic acid unit as long as the amount of the other dicarboxylic acid units is 40% by mole or less. Examples of the other dicarboxylic acid unit include structural units derived from aliphatic dicarboxylic acids such as malonic acid, dimethylmalonic acid, succinic acid, 3,3-diethylsuccinic acid, glutaric acid, 2,2-dimethylglutaric acid, adipic acid, 2-methyladipic acid, trimethyladipic acid, pimellic acid, azelaic acid, sebacic acid and suberic acid; structural units derived from alicyclic dicarboxylic acids such as 1,3-cyclopentanedicarboxylic acid and 1,4-cyclohexanedicarboxylic acid; and structural units derived from aromatic dicarboxylic acids such as isophthalic acid, 2,6-naphthalenedicarboxylic acid, 1,4-phenylenedioxane- diacetic acid, 1,3-phenylenedioxanediacetic acid, diphenic acid, 4,4'-oxydibenzoic acid, diphenylmethane-4,4'-dicarboxylic acid, diphenylsulfone-4,4'-dicarboxylic acid and 4,4'-biphenyldicarboxylic acid. The polyamide may comprise the dicarboxylic acid unit described above singly or in combination or two or more.

When the polyamide forming the polyamide fiber comprises the other dicarboxylic acid units in combination with the terephthalic acid unit as the dicarboxylic acid unit, it is preferable that the polyamide comprises aromatic dicarboxylic acid units other than the terephthalic acid unit from the standpoint of the oxidation resistance, the chemical resistance and the heat resistance.

The polyamide may further comprise, where necessary, structural units derived from polybasic carboxylic acids having a functionality of three or greater such as trimellitic acid, trimesic acid and pyromellitic acid as long as the amount is small and the melt spinning can be conducted.

It is necessary that the polyamide fiber which is one of the main component fibers constituting the separator for alkaline batteries of the present invention comprise 40% by mole or more of the 1,9-nonanediamine unit based on the entire amount of the diamine units constituting the polyamide so that the oxidation resistance, the heat resistance, the hydrolysis resistance and the dimensional stability of the polyamide fiber are improved and, as the result, these properties of the separator for alkaline batteries using the polyamide are improved. It is preferable that the polyamide fiber comprises 50% by mole or more and 99% by mole or less of the 1,9-nonanediamine unit.

In particular, it is preferable that the polyamide forming the polyamide fiber comprises the 2-methyl-1,8-octanediamine unit as the diamine unit in combination with the 1,9-nonanediamine unit since the oxidation resistance, the chemical resistance, the heat resistance and the hydrolysis resistance of the polyamide fiber are further improved.

When the polyamide forming the polyamide fiber comprises both of the 1,9-nonanediamine unit and the 2-methyl-1,8-octanediamine unit, it is preferable that the total of the amounts of the both units is in the range of 60 to 100% by mole and preferably in the range of 80 to 100% by mole based on the entire amount of the diamine units constituting the polyamide. In this case, it is preferable that the ratio of [the amounts by mole of the 1,9-nonanediamine unit] to [the amount by mole of the 2-methyl-1,8-octanediamine unit] is in the range of 99:1 to 40:60, more preferably in the range of 99:1 to 50:50 and most preferably in the range of 95:5 to 70:30 from the standpoint of the oxidation resistance, the chemical resistance, the heat resistance, the hydrolysis resistance and the property for melt spinning.

When the polyamide forming the polyamide fiber comprises the 1,9-nonanediamine unit and does not comprise the 2-methyl-1,8-octanediamine unit, it is preferable that the amount of the 1,9-nonanediamine unit is in the range of 60 to 100% by mole based on the amount of the entire diamine units constituting the polyamide from the standpoint of the oxidation resistance, the chemical resistance, the heat resistance, the hydrolysis resistance and the property for melt spinning.

The polyamide forming the polyamide fiber may further comprise, where necessary, diamine units other than the 1,9-nonanediamine unit and the 2-methyl-1,8-octanediamine units as long as the objects of the present invention are not adversely affected. Examples of the other diamine unit which may be comprised in the polyamide include diamine units derived from aliphatic diamines such as ethylenediamine, propylenediamine, 1,4-butanediamine, 1,6-hexanediamine, 1,8-octanediamine, 1,10-decanediamine, 1,12-dodecanediamine, 2-methyl-1,5-pentanediamine, 3-methyl-1,5-pentanediamine, 2,2,4-trimethyl-1,6-hexanediamine, 2,4,4-trimethyl-1,6-hexanediamine, 2-methyl-1,8-octanediamine and 5-methyl-1,9-nonanediamine. The polyamide forming the polyamide fiber may comprise the diamine unit described above singly or in combination or two or more.

It is preferable that the polyamide forming the polyamide fiber has an intrinsic viscosity [$\eta$] in the range of 0.6 to 2.0 dl/g, more preferably in the range of 0.6 to 1.9 dl/g and most preferable in the range of 0.8 to 1.6 dl/g as measured in concentrated sulfuric acid at 30°C since the property for melt spinning and the mechanical properties of the obtained polyamide fiber are excellent.

It is preferable that 10% or more, more preferably 35% or more and most preferably 70% or more of the chain ends in the polyamide forming the polyamide fiber are sealed from the standpoint of the property for melt spinning in the production of the fiber and the oxidation resistance, the chemical resistance, the heat resistance and the hydrolysis resistance of the obtained polyamide fiber.

For obtaining the fraction of sealed chain ends in the polyamide, the numbers of the chain ends of the carboxyl group and the amino group and the chain end sealed with a chain end sealing agent present in the polyamide are measured and the fraction of sealed chain ends can be obtained from the obtained numbers in accordance with mathematical equation (2) described in EXAMPLES. It is preferable that the numbers of the chain end groups are obtained by obtaining the integral values of the characteristic signals assigned to the chain end groups in accordance with the $^1$H-NMR, followed by obtaining the numbers of the chain end groups from the obtained values by calculation from the standpoint of the accuracy and the easiness.

The chain end sealing agent for the polyamide is not particularly limited as long as the agent is a monofunctional compound reactive with the amino group or the carboxyl group present at the chain ends of the polyamide molecules. From the standpoint of the reactivity and the stability of the sealed chain ends, monocarboxylic acids and monoamines are preferable as the chain end sealing agent. Among these compounds, monocarboxylic acids are preferable from the standpoint of the easiness of handling.

The monocarboxylic acid which can be used as the chain end sealing agent is not particularly limited as long as the agent can react with amino group. Examples of the monocarboxylic acid include aliphatic monocarboxylic acids such as acetic acid, propionic acid, butyric acid, valeric acid, caproic acid, caprylic acid, lauric acid, tridecylic acid, myristic acid, palmitic acid, stearic acid, pivalic acid and isobutyric acid; alicyclic monocarboxylic acids such as cyclohexanecarboxylic acid; and aromatic monocarboxylic acids such as benzoic acid, toluic acid, $\alpha$-naphthalenecarboxylic acid, $\beta$-naphthalenecarboxylic acid, methylnaphthalene carboxylic acid and phenylacetic acid. The above carboxylic acids can be used singly or in combination or two or more. Among the above carboxylic acids, acetic acid, propionic acid, caproic acid, caprylic acid, lauric acid, tridecylic acid, myristic acid, palmitic acid, stearic acid and benzoic acid are preferable from the standpoint of the reactivity, the stability of the sealed chain ends and the price.

To seal the chain ends of the polyamide with the monocarboxylic acid, the amount by mole of the diamine component is set slightly greater than the amount by mole of the dicarboxylic acid component in the preparation of the polyamide so that both chain ends of the polyamide have amino groups, and the monocarboxylic acid is added to the thus obtained polyamide to seal the amino group at the chain ends.

When the chain ends of the polyamide is sealed with a monoamine, the monoamine is not particularly limited as long as the monoamine can react with carboxyl group. Examples of the monoamine include aliphatic monoamines such as methylamine, ethylamine, propylamine, butylamine, hexylamine, octylamine, decylamine, stearylamine, dimethylamine, diethylamine, dipropylamine and dibutylamine; and aromatic monoamines such as aniline, toluidine, diphenylamine and naphthylamine. The monoamines described above can be used singly or in combination or two or more. Among the above monoamines, butylamine, hexylamine, octylamine, decylamine, stearylamine, cyclohexylamine and aniline are preferable from the standpoint of the reactivity with carboxyl group, the boiling point, the stability of the sealed chain ends and the price.

To seal the chain ends of the polyamide with the monoamine, the amount by mole of the diamine component is set slightly smaller than the amount by mole of the dicarboxylic acid component in the preparation of the polyamide so that both chain ends of the polyamide have carboxyl groups, and the monoamine is added to the thus obtained polyamide to seal the carboxyl group at the chain ends.

It is preferable that the amount of the chain end sealing agent used in the preparation of the polyamide is adjusted in accordance with the intrinsic viscosity [η] (the molecular weight) of the polyamide obtained at the end of the process, the fraction of sealed chain ends, the reactivity and the boiling point of the chain end sealing agent and the conditions of the reaction. In general, it is preferable that the chain end sealing agent is used in an amount in the range of about 0.5 to 10% by mole based on the total of the amount by mole of the dicarboxylic acid and the amount by mole of the diamine.

It is preferable that the size of the single fiber in the polyamide fiber constituting the separator for alkaline batteries of the present invention is in the range of 0.01 to 1.0 dtex and more preferably in the range of 0.1 to 0.8 dtex from the standpoint of the property for handling in the production of the non-woven fiber structural material for the separator for alkaline batteries using a paper machine and the property for holding the alkaline electrolyte, the property for separation and the internal resistance of the obtained separator for alkaline batteries.

It is preferable that the length of the polyamide fiber constituting the separator for alkaline batteries of the present invention is in the range of about 0.5 to 5 mm and more preferably in the range of 1 to 4 mm from the standpoint of the property for dispersion of the polyamide fiber in water and the property for forming the texture in the production of the non-woven fiber structural material for the separator for alkaline batteries using a paper machine.

The processes for producing the polyamide and the fiber comprising the polyamide used in the present invention are not particularly limited and any processes can be used as long as the polyamide and the polyamide fiber having the composition of the structural units described above can be produced. For example, the polyamide can be produced in accordance with the solution polymerization process or the interfacial polymerization process using an acid chloride and the diamine as the raw materials or in accordance with the melt polymerization process, the solid phase polymerization process or the melt extrusion polymerization process using the dicarboxylic acid and the diamine as the raw materials. The obtained polyamide is melt spun and drawn in accordance with a conventional process, cut into a prescribed length and the polyamide fiber for the separator for alkaline batteries can be obtained.

The polyamide and the fiber comprising the polyamide used in the present invention can be advantageously produced, for example, in accordance with the process described in the following. However, the processes for producing the polyamide and the fiber comprising the polyamide used the present invention are not limited to the process described as the example.

[Example of preparation of a polyamide and a polyamide fiber]

(1) Preparation of a polyamide

A chain end sealing agent and a catalyst are added together to the diamine and the dicarboxylic acid at the beginning of the reaction and a nylon salt is formed. The formed nylon salt is polymerized at a temperature of 280°C or lower and a prepolymer having an intrinsic viscosity [η] in the range of 0.15 to 0.25 dl/g (in concentrated sulfuric acid, at 30°C) is prepared. The obtained prepolymer is polymerized in accordance with the solid phase polymerization process or the process using a melt extruder until the intrinsic viscosity has a value in the range of 0.6 to 2.0 dl/g. The polyamide for the polyamide fiber can be produced easily in accordance with the above process.

In the above process, when the chain end sealing agent and the catalyst are not added at the beginning of the production of the prepolymer but at a stage after the formation of the nylon salt, problems tend to arise in that the suitable balance between the amount by mole of the carboxyl group and the amount by mole of the amino group is lost during the polymerization and crosslinked structures are formed. Therefore, it is preferable that the chain end sealing agent and the catalyst are added at the beginning.

By adjusting the intrinsic viscosity [η] of the prepolymer in the range of 0.15 to 0.25 dl/g described above, the loss of the suitable balance between the amount by mole of the carboxyl group and the amount by mole of the amino group can be prevented and the decrease in the polymerization rate is suppressed in the post-polymerization step for increasing the molecular weight. Thus, the polyamide having a narrow molecular weight distribution and exhibiting excellent physical properties and property for melt spinning can be obtained.

In the above process, when the post-polymerization step for increasing the molecular weight is conducted in accordance with the solid phase polymerization, it is preferable that the polymerization is conducted under a reduced pressure or under a stream of an inert gas. When the polymerization temperature in the post-polymerization step is adjusted in the range of 200 to 250°C, the polyamide having no color and containing no gel can be produced with excellent productivity while the polymerization rate is kept at a great value.

When the final step of the polymerization is conducted using a melt extruder, almost no decomposition of the polyamide takes place and the polyamide can be obtained without degradation by adjusting the polymerization temperature at 370°C or lower.

Examples of the catalyst described above used for producing the polyamide include phosphoric acid, phosphorous acid, hypophosphorous acid, ammonium salts of these acids, salts of these acids with metals such as potassium, sodium, magnesium, vanadium, calcium, zinc, cobalt, manganese, tin, tungsten, germanium, titanium and antimony, and esters of these acids such as ethyl esters, isopropyl esters, butyl esters, hexyl esters, undecyl esters, octadecyl esters, decyl esters, stearyl esters and phenyl esters. Among these compounds, sodium hypophosphite is preferable from the standpoint of the availability and the property for handling.

In the preparation of the polyamide, where necessary, stabilizers and antioxidants may be added during the polymerization or after the polymerization.

(2) Preparation of the polyamide fiber

The polyamide fiber is prepared by melt spinning the polyamide obtained above. It is preferable that the melt spinning is conducted using a melt extruder and more preferably using a melt extruder of the screw type. The polyamide obtained above is melted preferably at a temperature in the range of the melting point to 360°C and extruded from nozzles of a die in a fiber shape with a melt residence time of 30 minutes or shorter. The heat decomposition during the spinning is suppressed and the polyamide fiber having the excellent quality can be obtained when the melt temperature and the melt residence time satisfy the above conditions.

The polyamide fiber (the thread) spun in the above is drawn by a winding roller or the like. Where necessary, a zone for heating or keeping the temperature may be disposed directly under the nozzles or a cooling zone using a blowing chamber or the like may be disposed. An oil may be applied to the thread formed by the spinning. It is preferable that the melt spinning is conducted in a manner such that the drawn fiber has a birefringence of $20 \times 10^{-3}$ or smaller. By adjusting the birefringence at $20 \times 10^{-3}$ or smaller, the polyamide fiber can be drawn sufficiently in the drawing step and the polyamide fiber having a great strength can be obtained.

The polyamide fiber obtained above is drawn. The drawing can be conducted by using a conventional apparatus for drawing such as the heated oil bath, the apparatus for blowing with heated steam, the roller heater, the plate heater of the contact type and the plate heater of the non-contact type. It is preferable that the temperature of the drawing is 270°C or lower and more preferably in the range of 120 to 250°C, and the draw ratio is 2 or greater and more preferably 3 or greater. When the temperature of drawing is higher than 270°C, degradation of the polyamide and reorganization of the crystals take place and the strength of the fiber tends to decrease. Where necessary, following the drawing, the heat treatment at a fixed length, the heat treatment under tension or the heat treatment under relaxation may be conducted at a temperature in the range of 120 to 270°C.

As another process, the object polyamide fiber may be prepared in the single step by the direct drawing after spinning without using the above process.

By adjusting the hole diameter of the nozzle in the melt spinning, the amount of spinning of the polyamide and the draw ratio in the series of steps described above for obtaining the polyamide fiber, the polyamide fiber having a size of the single fiber in the range of 0.01 to 1.0 denier which can be advantageously used for the separator for alkaline batteries can be obtained.

The polyamide fiber obtained as described above is cut into a length in the range of 0.5 to 5 mm and short fibers of the polyamide for forming the separator for alkaline batteries of the present invention can be produced.

In the present invention, it is necessary that the so-called "solvent-spun cellulose fiber" which is produced by using a spinning solution prepared by dissolving cellulose into a non-reactive solvent is used as the other main component fiber constituting the separator for alkaline batteries.

The "solvent-spun cellulose fiber" is different from the so-called regenerated cellulose fiber which is prepared by chemically converting (modifying) cellulose into a cellulose derivative, followed by regenerating cellulose from the cellulose derivative, such as the conventional viscose rayon and the conventional copper ammonia rayon. The present fiber is a fiber obtained by simply dissolving cellulose into a solvent without chemical conversion (modification), followed by coagulating the obtained solution to obtain cellulose in the fiber shape. From this standpoint, the solvent-spun cellulose fiber used in the present invention is greatly different from fiber and pulp modified with an alkali (mercerized) which are obtained by the treatment with a concentrated alkali, such as mercerized cellulose fiber and mercerized pulp.

Physical properties of the solvent-spun cellulose fiber used in the present invention are greatly different from those of the conventional regenerated cellulose fibers obtained by regeneration from cellulose II (hydrated cellulose) via viscose, such as viscose rayon, polynodic rayon, high tenacity rayon and copper ammonia rayon, and fibrils at the inside of the fiber are well developed into the innermost portion of the fiber.

The solvent-spun cellulose fiber used in the present invention is not particularly limited as long as the fiber is the cellulose fiber prepared in accordance with the solvent-spinning process, in which a spinning solution is prepared by dissolving cellulose into a "non-reactive solvent", i.e., a solvent which dissolves cellulose without causing reactions with cellulose (without causing chemical modification of cellulose) and the cellulose fiber is obtained by using the prepared spinning solution.

As the cellulose material for obtaining the solvent-spun cellulose fiber, cellulose I (natural cellulose without any modification) alone, cellulose II (hydrated cellulose) alone and mixtures of cellulose I and cellulose II can be used. From the standpoint of the recycling of resources, the cellulose fiber obtained by coagulating the solution of the cellulose material into the fiber shape using cellulose I alone as the cellulose material is preferable.

As the non-reactive solvent used for the preparation of the solvent-spun cellulose fiber, any solvent can be used as long as the solvent can dissolve cellulose without causing reactions with cellulose. Examples of the non-reactive solvent include inorganic solvents such as an aqueous solution of zinc chloride, organic solvents such as N-methylmorpholinoxide as a typical example and mixed solvents of the organic solvent and water. Among these solvents, amine oxides such as N-methylmorpholinoxide is preferable as the non-reactive solvent from the standpoint of the cost and the environment.

Examples of the solvent-spun cellulose fiber preferably used in the present invention include solvent-spun cellulose fibers which are prepared in a manner such that a spinning solution is prepared by dissolving cellulose in an amine oxide, the prepared spinning solution is subjected to the dry-wet spinning in water, and the obtained fiber is further drawn. Typical examples of the solvent-spun cellulose fiber described above include "TENCEL" (a registered trade name) manufactured by ACORDIS Company in England and "SOLUTION" (a registered trade name) manufactured by RENZING Company in Austria.

The dry-wet spinning is the process in which the spinning solution is extruded from a die into a gas, which is typically the air, and the extruded fluid is immediately introduced into a coagulating fluid for coagulation. In general, the die is disposed in the gas at a position above the surface of the coagulating fluid by 5 to 200 mm. After the spinning solution extruded from the die is passed through the gas, the spinning solution is introduced into a coagulating bath comprising water or the like and is coagulated.

In the present invention, the reason why the oxidation is suppressed remarkably even when the separator is exposed to high temperatures for a long time, for example, even when the separator is stored at high temperatures, and a great positive electrode capacity (the capacity of the battery) can be maintained for a long time when the separator for alkaline batteries is formed using the specific polyamide fiber described above in combination with the solvent-spun cellulose as the main component fibers is not fully elucidated but can be considered as follows.

The solvent-spun cellulose fiber has a great Young's modulus under the wet condition, and flatting in water is small. The degree of crystallization and the orientation are great, and the resistance to alkali is excellent. Therefore, when the solvent-spun cellulose fiber is treated by wet beating in water by using a beater or a refiner, a thin and long material having fibrils is formed, and the formed material having fibrils has a great degree of crystallization and orientation. When the separator for alkaline batteries is produced by using the solvent-spun cellulose fiber (in particular, the product obtained after the beating treatment) in combination with the polyamide fiber described above, pores are formed. Therefore, it is considered that the separator for alkaline batteries which exhibits the improved property for separation, the excellent resistance to alkalis and the suppressed degradation by oxidation and maintains the great positive electrode capacity (the capacity of the battery) for a long time can be obtained.

In the present invention, cellulose fibers having Canadian standard freeness (CSF) in the range of 100 to 700 ml are preferable from the standpoint of the prevention of the internal short circuit.

From the standpoint of the workability in the production of the separator for alkaline batteries and the property for absorbing the alkaline electrolyte, the property for separation and the property for working by a paper machine of the separator for alkaline batteries, it is preferable that the diameter of the cellulose fiber is in the range of 5 to 20 μm and more preferably in the range of 6 to 15 μm and the length of the cellulose fiber is in the range of 0.5 to 5 mm and more preferably in the range of 1.5 to 4 mm.

In the separator (the non-woven fiber structural material) for alkaline batteries of the present invention, it is necessary that the ratio of the amount by mass of the polyamide fiber to the amount by mass of the cellulose fiber which are described above be in the range of 20:80 to 80:20, preferably in the range of 20:80 to 70:30 and more preferably in the range of 25:75 to 50:50. When the amount of the polyamide fiber is less than 20% by mass, i.e., when the amount of the cellulose fiber exceeds 80% by mass, based on the total of the amounts of the polyamide fiber and the mass, based on the total of the amounts of the polyamide fiber and the cellulose fiber, the oxidation resistance of the separator for alkaline batteries decreases, and it becomes difficult that the decrease in the capacity of the battery and the decrease in the discharging property in exposure to high temperatures are suppressed. When the amount of the polyamide fiber exceeds 80% by mass, i.e., when the amount of the cellulose fiber is less than 20% by mass, the ability of the separator for alkaline batteries absorbing the alkaline electrolyte decreases and the pore size increases. Therefore, obtaining a great amount of the electric current becomes difficult and the property for preventing the internal short circuit decreases.

In the separator for alkaline batteries of the present invention, it is preferable that the main component fibers comprising the polyamide fiber and the cellulose fiber are adhered together with a binder from the standpoint of the easiness of producing the separator for alkaline batteries and the strength and the property for holding the shape of the obtained separator for alkaline batteries.

As the binder, any of fiber-shaped binders, powder-shaped binders shape and liquid binders can be used. The fiber-shaped binder are preferable since the main component fibers are excellently adhered to each other and the pores in the separator for alkaline batteries can be made finer.

Any fiber-shaped binders can be used as long as the entire portion or a portion of the binder is melted, softened or dissolved at the temperature of heating during the production of the non-woven fiber structural material constituting the separator for alkaline batteries and the adhesion between the main component fibers and the adhesion between the main component fibers and the fiber-shaped binder can be achieved. Examples of the fiber-shaped binder include polyvinyl alcohol-based fibers, ethylene-vinyl alcohol-based copolymer fibers, polyethylene fibers, polyamide fibers and vinyl chloride-vinyl acetate-based copolymer fibers. The fiber-shaped binder may be used singly or in combination of two or more. Among the above fiber-shaped binders, the polyvinyl alcohol-based fibers and the ethylene-vinyl alcohol-based copolymer fibers are preferable due to the great affinity with the alkaline electrolyte.

As the polyvinyl alcohol-based binder preferable as the fiber-shaped binder, polyvinyl alcohol-based binders having a temperature of dissolution in water in the range of 50 to 90°C and more preferably in the range of 60 to 80°C are preferable. As the ethylene-vinyl alcohol copolymer-based binder, ethylene-vinyl alcohol copolymer-based binders having a melting point in the range of 50 to 130°C and more preferably in the range of 60 to 110°C are preferable.

It is preferable that the size of the fiber-shaped binder is in the range of 0.01 to 1.5 dtex and more preferably in the range of 0.04 to 1.2 dtex. When the size of the fiber-shaped binder exceeds 1.5 dtex, the surface area of the fiber decreases and the efficiency of adhesion decreases. Moreover, fine pores in the separator for alkaline batteries are shielded and the internal resistance of the battery increases.

It is preferable that the amount of the fiber-shaped binder is in the range of 3 to 30% by mass and more preferably in the range of 5 to 20% by mass based on the total of the amount by mass of the main component fibers comprising the polyamide fiber and the cellulose fiber and the amount by mass of the fiber-shaped binder from the standpoint of the efficiency of adhesion and the physical properties and the internal resistance of the obtained separator for alkaline batteries.

The separator for alkaline batteries of the present invention may further comprise, where desired, other fibers such as synthetic fibers having a temperature of dissolution in water higher than that of the fiber-shaped binder, examples of which include polyvinyl alcohol-based fibers, polyacrylonitrile fibers, polyolefin fibers, polyvinylidene chloride fibers and polyurethane fibers, rayons such as viscose rayon and chemical fibers such as rayon, cupro and acetate in combination with the above polyamide fiber, the cellulose fiber and the fiber-shaped binder as long as the objects of the present invention are not adversely affected.

When the separator for alkaline batteries of the present invention is treated with a surfactant, the rate of absorption of the alkaline electrolyte during the assembly of the battery can be increased.

The process, the apparatus and the conditions for producing the separator for alkaline batteries of the present invention are not particularly limited. Any of the conventional processes which can produce the non-woven fiber structural material from the main fiber components described above and, preferably, using the fiber-shaped binder described above in combination with the main fiber components, can be used. In particular, the wet process using a paper machine is preferable. For example, the separator for alkaline batteries or the non-woven fiber structural material (the material sheet) for the separator for alkaline batteries having the desired shape, dimension, thickness and the unit weight can be obtained as follows: an aqueous slurry is prepared from the polyamide fiber, the cellulose fiber and the fiber-shaped binder described above; a sheet is prepared from the aqueous slurry using a circular net paper machine or a mold which allows passage of liquids; the liquid is removed from the resultant sheet; and the obtained sheet is dried. It is preferable that the sheet prepared from the aqueous slurry is dried at a temperature in the range of 100 to 140°C.

The shape of the separator for alkaline batteries of the present invention is not particularly limited and various shapes may be used in accordance with the shape in the application. For example, any of shapes of flat paper and non-woven fabrics, a shape of a cylinder, a shape of a cylinder having a bottom and other prescribed shapes can be used.

The unit weight of the separator for alkaline batteries of the present invention can be adjusted in accordance with the type of the battery to which the separator is attached. In general, from the standpoint of the light weight, the property for holding the alkaline electrolyte, the property for separation and the internal resistance, it is preferable that the unit weight is in the range of 20 to 60 g/m$^2$ and more preferably in the range of 23 to 45 g/m$^2$.

The separator for alkaline batteries of the present invention exhibits excellent property for absorbing the electrolyte (property for holding the electrolyte) since the specific polyamide fiber having the excellent oxidation resistance described above is used as one of the main fiber components in combination with the cellulose fiber. Moreover, the separator is not degraded by oxidation in storage at high temperatures even when the separator is used for alkali batteries using the positive electrode mix containing compounds having a great oxidizing ability such as nickel oxyhydroxide, and the decrease in the capacity of the battery can be suppressed even when the separator is exposed to high temperatures for a long time, for example, even when the separator is stored at high temperatures.

Therefore, taking advantage of the above properties, the separator for alkaline batteries of the present invention can be particularly effectively used for alkaline manganese batteries using manganese dioxide added with compounds exhibiting great oxidizing ability such as nickel oxyhydroxide as the positive electrode mix. The separator can also be used effectively for batteries other than the alkaline manganese battery such as the silver oxide battery and the electric double layer capacitor batteries.

EXAMPLES

The present invention will be described more specifically with reference to examples in the following. However, the present invention is not limited to the examples.

The intrinsic viscosity [η] and the fraction of sealed chain ends of polyamides obtained in Preparation Examples 1 to 9 described in the following were measured in accordance with the following methods.

<<Intrinsic viscosity of a polyamide [η]>>

A polyamide was dissolved into concentrated sulfuric acid, and sample solutions having concentrations of 0.05, 0.1, 0.2 and 0.4 dl/g were prepared. Inherent viscosities $\eta_{inh}$ were obtained at 30°C in accordance with the following mathematical equation (1), and the value obtained by extrapolating the resultant values to the concentration of 0 was used as [η].

$$\eta_{inh} = [\ln(t_1/t_0)]/C \qquad (1)$$

[In the above equation, to represents the flow time (second) of the solvent, $t_1$ represents the flow time (second) of the sample solution and C represents the concentration of the sample solution.]

<<Fraction of sealed chain ends>>

The numbers of carboxyl group and amino group at the chain ends and the number of the chain end sealed with the chain end sealing agent were measured, and the fraction of sealed chain ends could be obtained in accordance with the following mathematical equation (2). From the standpoint of the accuracy and convenience, it was preferable that the number of each chain end group was obtained from the characteristic signal assigned to respective chain end groups in accordance with $^1$H-NMR.

$$\text{Fraction of sealed chain ends (\%)} = [(X-Y)/X] \times 100 \qquad (2)$$

[In the above equation, X represents the number of the entire end groups in the molecular chains, which is, in general, equal to twice the number of the polyamide molecules, and Y represents the total of the number of carboxyl group left remaining at the chain ends without being sealed and the number of amino group left remaining at the chain ends without being sealed.]

To evaluate the properties of separators for alkaline batteries, alkaline dry cells of size AA were prepared in accordance with the procedures described in Example of Cell Preparation 1 described in the following using the separators for alkaline batteries obtained in the following Examples and Comparative Examples. The discharging property of the obtained alkaline dry cells was evaluated in accordance with the method described in the following, and the properties of the separator for alkaline batteries were evaluated based on the obtained result.

《《Example of Cell Preparation 1》》 [Preparation of an alkaline dry cell]

(1) Nickel oxyhydroxide (the particle diameter: 5 to 15 µm) in an amount of 50 parts by mass, 50 parts by mass of manganese dioxide (the particle diameter: 20 to 50 µm), 5 parts by mass of graphite powder (the particle diameter: 10 to 25 µm), polyethylene powder (the particle diameter: 5 to 15 µm) and 1 part by mass of an aqueous solution of potassium hydroxide (an electrolyte) having a concentration of 40% by mass were mixed by a mixer. After the particle diameter of the resultant mixture was adjusted at the prescribed value, the obtained particulate mixture was molded into a short cylindrical shape, and a positive electrode mix was prepared.

(2) Into a positive electrode can which was used also as the positive terminal, the positive electrode mix having a short cylindrical shape which was prepared in (1) described above was placed under a pressure. Then, a separator having a shape of a cylinder having a bottom which was formed from a sheet prepared by a paper machine in each Example or Comparative Example was inserted at the inside of the positive electrode mix having a short cylindrical shape. The inside of the separator having a shape of a cylinder having a bottom was filled with a negative electrode mix in the gel form which was prepared by mixing 1 part by mass of sodium acrylate, 33 parts by mass of an aqueous solution of potassium hydroxide having a concentration of 40% by mass and 66 parts by mass of zinc powder. A negative electrode collector was disposed at the central portion of the separator having a shape of a cylinder having a bottom. The open end of the positive electrode can was sealed with a sealing pair made of a resin, to which a negative electrode terminal (a bottom plate) connected to the head portion of the negative electrode collector described above was welded, and a washer made of a metal. Thus, an alkaline dry cell of size AA was prepared.

《《Evaluation of the discharging property of an alkaline dry cell》》

For the evaluation of the discharging property of an alkaline dry cell, alkaline dry cells of size AA prepared in accordance with the procedures described in Example of Cell Preparation 1 were used immediately after the preparation, after being kept at 25°C for 1 week after the preparation and after being kept at 80°C for 3 days after the preparation. The dry cells were each treated by the continuous discharge at a temperature of the environment of 20°C under an electric current of 1,500 mA, and the time passed until the voltage reached 0.9 V was measured. The discharging property was evaluated as a relative value based on the discharging time of the alkaline dry cell prepared by using the separator of Comparative Example 1 and evaluated immediately after the preparation, which was set at 100.

《《Preparation Example 1》》 [Preparation of a polyamide and polyamide fiber (a$_1$)]

(1) Into an autoclave having an inner volume of 20 dm$^3$, 2,825 g (17.2 moles) of terephthalic acid, 1,521 g (9.2 moles) of isophthalic acid, 2,391 g (15.1 moles) of 1,9-nonanediamine, 1,956 g (12.4 moles) of 2-methyl-1,8-octanediamine, 268.5 g (2.20 moles) of benzoic acid (the chain end sealing agent), 9.0 g (0.1% by mass based on the amount of the materials forming the polyamide) of sodium hypophosphite hydrate and 2.2 dm$^3$ of distilled water were placed, and the autoclave was purged with nitrogen.
(2) Then, the content of the autoclave was stirred at 100°C for 30 minutes, and the temperature inside the autoclave was raised to 210°C over 2 hours (the pressure inside the autoclave at this temperature was 22 kg/cm$^2$). After the reaction was allowed to proceed in this condition for 1 hour, the temperature was raised to 230°C. The reaction was allowed to proceed for 2 hours while the pressure was kept at 22 kg/cm$^2$ by slowly releasing generated steam and the temperature was kept at 230°C.
(3) The pressure was lowered to 10 kg/cm$^2$ over 30 minutes. The reaction was allowed to proceed under this pressure for 1 hour, and a prepolymer was prepared. The obtained prepolymer was dried under a reduced pressure at 100°C for 12 hours, and the dried prepolymer was pulverized into particles having a size of 2 mm or smaller.
(4) The pulverized prepolymer obtained in (3) described above was subjected to the solid phase polymerization under a reduced pressure of 132.9 Pa (0.1 mmHg) at 230°C for 10 hours, and a polyamide was prepared. The intrinsic viscosity [η] and the fraction of sealed chain ends of the prepared polyamide were measured in accordance with the methods described above and were found to be 0.65 and 88%, respectively.

(5) The polyamide obtained in (4) described above was supplied to a melt spinning apparatus of the screw extrusion type. Fibers were spun through a spinning die (having 100 holes each having a round nozzle having a diameter of 0.1 mm) at a temperature of spinning by extrusion of 300°C and wound. The thread obtained from the fibers was drawn to a length 3.2 times the original length and heated by passing through a drawing bath (the first bath; the temperature: 85°C) and a heating bath (the second bath; the temperature: 95°C), and a tow composed of a polyamide fiber in which the single fiber had a size of 0.1 dtex was obtained.

(6) The tow obtained in (5) described above was cut into fibers having a length of 2 mm, and polyamide fiber ($a_1$) having a short fiber shape was prepared.

《Preparation Example 2》 [Preparation of a polyamide and polyamide fiber ($a_2$)]

(1) Into an autoclave having an inner volume of 20 $dm^3$, 2,989 g (18.0 moles) of terephthalic acid, 1,609 g (9.7 moles) of isophthalic acid, 2,402 g (15.2 moles) of 1,9-nonanediamine, 1,975 g (12.5 moles) of 2-methyl-1,8-octanediamine, 67.6 g (0.55 moles) of benzoic acid (the chain end sealing agent), 9.0 g (0.1% by mass based on the amount of the materials forming the polyamide) of sodium hypophosphite hydrate and 2.2 $dm^3$ of distilled water were placed, and the autoclave was purged with nitrogen.

(2) Then, the content of the autoclave was stirred at 100°C for 30 minutes, and the temperature inside the autoclave was raised to 210°C over 2 hours (the pressure inside the autoclave at this temperature was 22 $kg/cm^2$). After the reaction was allowed to proceed in this condition for 1 hour, the temperature was raised to 230°C. The reaction was allowed to proceed for 2 hours while the pressure was kept at 22 $kg/cm^2$ by slowly releasing generated steam and the temperature was kept at 230°C.

(3) The pressure was lowered to 10 $kg/cm^2$ over 30 minutes. The reaction was allowed to proceed under this pressure for 1 hour, and a prepolymer was prepared. The obtained prepolymer was dried under a reduced pressure at 100°C for 12 hours, and the dried prepolymer was pulverized into particles having a size of 2 mm or smaller.

(4) The pulverized prepolymer obtained in (3) described above was subjected to the solid phase polymerization under a reduced pressure of 132.9 Pa (0.1 mmHg) at 230°C for 10 hours, and a polyamide was prepared. The intrinsic viscosity [η] and the fraction of sealed chain ends of the prepared polyamide were measured in accordance with the methods described above and were found to be 1.40 and 65%, respectively.

(5) The polyamide obtained in (4) described above was melt spun, drawn and heated in accordance with the same procedures as those conducted in Preparation Example 1 (5), and a tow composed of a polyamide fiber in which the single fiber had a size of 0.8 dtex was obtained. In the preparation of the polyamide fiber, the speed of spinning and the speed of winding were adjusted so that the polyamide fiber in which the single fiber had the prescribed size could be obtained.

(6) The tow obtained in (5) described above was cut into fibers having a length of 3 mm, and polyamide fiber ($a_2$) having a short fiber shape was prepared.

《Preparation Example 3》 [Preparation of a polyamide and polyamide fiber ($a_3$)]

(1) Into an autoclave having an inner volume of 20 $dm^3$, 4,497 g (27.1 moles) of terephthalic acid, 3,495 g (22.1 moles) of 1,9-nonanediamine, 874 g (5.5 moles) of 2-methyl-1,8-octanediamine, 134.8 g (1.11 moles) of benzoic acid (the chain end sealing agent), 9.0 g (0.1% by mass based on the amount of the materials forming the polyamide) of sodium hypophosphite hydrate and 2.2 $dm^3$ of distilled water were placed, and the autoclave was purged with nitrogen.

(2) Then, the content of the autoclave was stirred at 100°C for 30 minutes, and the temperature inside the autoclave was raised to 210°C over 2 hours (the pressure inside the autoclave at this temperature was 22 $kg/cm^2$). After the reaction was allowed to proceed in this condition for 1 hour, the temperature was raised to 230°C. The reaction was allowed to proceed for 2 hours while the pressure was kept at 22 $kg/cm^2$ by slowly releasing generated steam and the temperature was kept at 230°C.

(3) The pressure was lowered to 10 $kg/cm^2$ over 30 minutes. The reaction was allowed to proceed under this pressure for 1 hour, and a prepolymer was prepared. The obtained prepolymer was dried under a reduced pressure at 100°C for 12 hours, and the dried prepolymer was pulverized into particles having a size of 2 mm or smaller.

(4) The pulverized prepolymer obtained in (3) described above was subjected to the solid phase polymerization under a reduced pressure of 132.9 Pa (0.1 mmHg) at 230°C for 10 hours, and a polyamide was prepared. The intrinsic viscosity [η] and the fraction of sealed chain ends of the prepared polyamide were measured in accordance with the methods described above and were found to be 1.00 and 74%, respectively.

(5) The polyamide obtained in (4) described above was melt spun, drawn and heated in accordance with the same procedures as those conducted in Preparation Example 1 (5), and a tow composed of a polyamide fiber in which the single fiber had a size of 0.3 dtex was obtained. In the preparation of the polyamide fiber, the speed of spinning and the speed of winding were adjusted so that the polyamide fiber in which the single fiber had the prescribed size could be obtained.

(6) The tow obtained in (5) described above was cut into fibers having a length of 2 mm, and polyamide fiber ($a_3$) having a short fiber shape was prepared.

《Preparation Example 4》 [Preparation of a polyamide and polyamide fiber ($a_4$)]

(1) In accordance with the same procedures as those conducted in Preparation Example 3, a polyamide having an intrinsic viscosity [η] of 1.00 and a fraction of sealed chain ends of 76% was prepared.

(2) The polyamide obtained in (1) described above was melt spun, drawn and heated in accordance with the same procedures as those conducted in Preparation Example 1 (5), and a tow composed of a polyamide fiber in which the single fiber had a size of 1.0 dtex was obtained. In the preparation of the polyamide fiber, the speed of spinning and the speed of winding were adjusted so that the polyamide fiber in which the single fiber had the prescribed size could be obtained.

(3) The tow obtained in (2) described above was cut into fibers having a length of 5 mm, and polyamide fiber ($a_4$) having a short fiber shape was prepared.

《Preparation Example 5》 [Preparation of a polyamide and polyamide fiber ($a_5$)]

(1) In accordance with the same procedures as those conducted in Preparation Example 3, a polyamide having an intrinsic viscosity [η] of 1.00 and a fraction of sealed chain ends of 75% was prepared.

(2) The polyamide obtained in (1) described above was melt spun, drawn and heated in accordance with the same procedures as those conducted in Preparation Example 1 (5), and a tow composed of a polyamide fiber in which the single fiber had a size of 0.5 dtex was obtained. In the preparation of the polyamide fiber, the speed of spinning and the speed of winding were adjusted so that the polyamide fiber in which the single fiber had the prescribed size could be obtained.

(3) The tow obtained in (2) described above was cut into fibers having a length of 2 mm, and polyamide fiber ($a_5$) having a short fiber shape was prepared.

《Preparation Example 6》 [Preparation of a polyamide and polyamide fiber ($a_6$)]

(1) In accordance with the same procedures as those conducted in Preparation Example 3, a polyamide having an intrinsic viscosity [η] of 1.00 and a fraction of sealed chain ends of 74% was prepared.

(2) The polyamide obtained in (1) described above was melt spun, drawn and heated in accordance with the same procedures as those conducted in Preparation Example 1 (5), and a tow composed of a polyamide fiber in which the single fiber had a size of 0.8 dtex was obtained. In the preparation of the polyamide fiber, the speed of spinning and the speed of winding were adjusted so that the polyamide fiber in which the single fiber had the prescribed size could be obtained.

(3) The tow obtained in (2) described above was cut into fibers having a length of 3 mm, and polyamide fiber ($a_6$) having a short fiber shape was prepared.

《Preparation Example 7》 [Preparation of a polyamide and polyamide fiber ($a_7$)]

(1) Into an autoclave having an inner volume of 20 $dm^3$, 1,798 g (10.8 moles) of terephthalic acid, 2,698 g (16.3 moles) of isophthalic acid, 3,495 g (22.1 moles) of 1,9-nonanediamine, 874 g (5.5 moles) of 2-methyl-1,8-octanediamine, 134.8 g (1.11 moles) of benzoic acid (the chain end sealing agent), 9.0 g (0.1% by mass based on the amount of the materials forming the polyamide) of sodium hypophosphite hydrate and 2.2 dm$^3$ of distilled water were placed, and the autoclave was purged with nitrogen.

(2) A polyamide was prepared in accordance with the same procedures as those conducted in Preparation Example 1 (2) to (4). The intrinsic viscosity [η] and the fraction of sealed chain ends were measured in accordance with the methods described above and were found to be 1.00 and 77%, respectively.

(3) The polyamide obtained in (2) described above was melt spun, drawn and heated in accordance with the same procedures as those conducted in Preparation Example 1 (5), and a tow composed of a polyamide fiber in which the single fiber had a size of 0.8 dtex was obtained. In the preparation of the polyamide fiber, the speed of spinning and the speed of winding were adjusted so that the polyamide fiber in which the single fiber had the prescribed size could be obtained.

(4) The tow obtained in (3) described above was cut into fibers having a length of 3 mm, and polyamide fiber ($a_7$) having a short fiber shape was prepared.

《Preparation Example 8》 [Preparation of a polyamide and polyamide fiber ($a_8$)]

(1) Into an autoclave having an inner volume of 20 dm$^3$, 4,497 g (27.1 moles) of terephthalic acid, 874 g (5.5 moles) of 1,9-nonanediamine, 3,495 g (22.1 moles) of 2-methyl-1,8-octanediamine, 134.8 g (1.11 moles) of benzoic acid (the chain end sealing agent), 9.0 g (0.1% by mass based on the amount of the materials forming the polyamide) of sodium hypophosphite hydrate and 2.2 dm$^3$ of distilled water were placed, and the autoclave was purged with nitrogen.

(2) A polyamide was prepared in accordance with the same procedures as those conducted in Preparation Example 1 (2) to (4). The intrinsic viscosity [η] and the fraction of sealed chain ends were measured in accordance with the methods described above and were found to be 1.00 and 75%, respectively.

(3) The polyamide obtained in (2) described above was melt spun, drawn and heated in accordance with the same procedures as those conducted in Preparation Example 1 (5), and a tow composed of a polyamide fiber in which the single fiber had a size of 0.8 dtex was obtained. In the preparation of the polyamide fiber, the speed of spinning and the speed of winding were adjusted so that the polyamide fiber in which the single fiber had the prescribed size could be obtained.

(4) The tow obtained in (3) described above was cut into fibers having a length of 3 mm, and polyamide fiber ($a_8$) having a short fiber shape was prepared.

《Preparation Example 9》 [Preparation of a polyamide and polyamide fiber ($a_9$)]

(1) Into an autoclave having an inner volume of 20 dm$^3$, 4,876 g (33.4 moles) of adipic acid, 3,954 g (34.1 moles) of hexamethylenediamine, 166.4 g (1.36 moles) of benzoic acid (the chain end sealing agent), 9.0 g (0.1% by mass based on the amount of the materials forming the polyamide) of sodium hypophosphite hydrate and 2.2 dm$^3$ of distilled water were placed, and the autoclave was purged with nitrogen.

(2) A polyamide was prepared in accordance with the same procedures as those conducted in Preparation Example 1 (2) to (4). The intrinsic viscosity [η] and the fraction of sealed chain ends were measured in accordance with the methods described above and were found to be 1.00 and 80%, respectively.

(3) The polyamide obtained in (2) described above was supplied to a melt spinning apparatus of the screw extrusion type. Fibers were spun through a spinning die (having 100 holes each having a round nozzle having a diameter of 0.1 mm) at a temperature of spinning by extrusion of 300°C and wound. The thread obtained from the fibers was drawn to a length 3.2 times the original length and heated by passing through a drawing bath (the first bath; the temperature: 85°C) and a heating bath (the second bath; the temperature: 95°C), and a tow composed of a polyamide fiber in which the single fiber had a size of 0.8 dtex was obtained.

(4) The tow obtained in (3) described above was cut into fibers having a length of 3 mm, and polyamide fiber ($a_9$) having a short fiber shape was prepared.

The conditions and the results of Preparation Examples 1 to 9 are shown together in Tables 1 and 2 in the following.

Table 1

| Preparation Example | 1 | 2 | 3 | 4 | 5 |
|---|---|---|---|---|---|
| [Material for polyamide] | | | | | |
| Acid component (% by mole) | | | | | |
| terephthalic acid | 65 | 65 | 100 | 100 | 100 |
| isophthalic acid | 35 | 35 | - | - | - |
| adipic acid | - | - | - | - | - |
| Diamine component (% by mole) | | | | | |
| 1,9-nonanediamine | 55 | 55 | 80 | 80 | 80 |
| 2-methyl-1,8-octanediamine | 45 | 45 | 20 | 20 | 20 |
| hexamethylenediamine | - | - | - | - | - |
| Ratio of amounts by mole of acid component to diamine component | 96:100 | 99:100 | 98:100 | 98:100 | 98:100 |
| Chain end sealing agent (benzoic acid) (% by mole) [1] | 8.0 | 2.0 | 4.0 | 4.0 | 4.0 |
| [Physical property of polyamide] | | | | | |
| intrinsic viscosity [η] | 0.65 | 1.40 | 1.00 | 1.00 | 1.00 |
| fraction of sealed chain ends (%) | 88 | 65 | 74 | 76 | 75 |
| [Polyamide fiber] | | | | | |
| type | $a_1$ | $a_2$ | $a_3$ | $a_4$ | $a_5$ |
| size of single fiber (dtex) | 0.1 | 0.8 | 0.3 | 1.0 | 0.5 |
| length of fiber (mm) | 2 | 3 | 2 | 5 | 2 |

1): % by mole based on the total of the amount by mole of the dicarboxylic acid unit and the amount by mole of the diamine unit.

Table 2

| Preparation Example | 6 | 7 | 8 | 9 |
|---|---|---|---|---|
| [Material for polyamide] | | | | |
| Acid component (% by mole) | | | | |
| terephthalic acid | 100 | 40 | 100 | - |
| isophthalic acid | - | 60 | - | - |
| adipic acid | - | - | - | 100 |
| Diamine component (% by mole) | | | | |
| 1,9-nonanediamine | 80 | 80 | 20 | - |
| 2-methyl-1,8-octanediamine | 20 | 20 | 80 | - |
| hexamethylenediamine | - | - | - | 100 |
| Ratio of amounts by mole of acid component to diamine component | 98:100 | 98:100 | 98:100 | 98:100 |
| Chain end sealing agent (benzoic acid) (% by mole) [1] | 4.0 | 4.0 | 4.0 | 4.0 |
| [Physical property of polyamide] | | | | |
| intrinsic viscosity [η] | 1.00 | 1.00 | 1.00 | 1.00 |
| fraction of sealed chain ends (%) | 74 | 77 | 75 | 80 |
| [Polyamide fiber] | | | | |
| type | $a_6$ | $a_7$ | $a_8$ | $a_9$ |
| size of single fiber (dtex) | 0.8 | 0.8 | 0.8 | 0.8 |
| length of fiber (mm) | 3 | 3 | 3 | 3 |

1): % by mole based on the total of the amount by mole of the dicarboxylic acid unit and the amount by mole of the diamine unit.

The cellulose fibers and the fiber-shaped binders used in Examples and Comparative Examples are described in the following and abbreviated as shown also in the following:

Cellulose fiber

(1) Cellulose fiber $b_1$:

"TENCEL" (a registered trade name) manufactured by ACORDIS Company; (CSF=400 ml)

(2) Cellulose fiber $b_2$:

"TENCEL" (a registered trade name) manufactured by ACORDIS Company; (CSF=300 ml)

(3) Cellulose fiber $b_3$:

Mercerized wood pulp; (CSF=400 ml)

(4) Cellulose fiber $b_4$:

Cotton linter (manufactured by TAIHEI SEISHI Co., Ltd.; CSF=400 ml)

Fiber-shaped binder

(1) Fiber-shaped binder $c_1$:

A polyvinyl alcohol fiber (VINYLON) (manufactured by KURARAY Co., Ltd.; "VPB 105-1×3") (the size of the single fiber = 1.0 dtex; the length of the fiber: 3 mm; the temperature of dissolution in water: 70°C)

(2) Fiber-shaped binder $c_2$:

A polyvinyl alcohol fiber (VINYLON) (manufactured by KURARAY Co., Ltd.) (the size of the single fiber = 0.08 dtex; the length of the fiber: 2 mm; the temperature of dissolution in water: 70°C)

(3) Fiber-shaped binder $c_3$:

An ethylene-vinyl alcohol copolymer fiber (manufactured by KURARAY Co., Ltd.) (the size of the single fiber = 0.05 dtex; the length of the fiber: 2 mm; the softening point: 95°C)

《Example 1》

(1) To 99,000 parts by mass of water at a temperature of 18°C, 20 parts by mass of polyamide fiber $a_1$ obtained in Preparation Example 1, 70 parts by mass of cellulose fiber $b_1$ and 10 parts by mass of fiber-shaped binder $c_1$ were added and uniformly mixed under stirring, and a material for paper making in the slurry form having a content of solid substances of 0.1% by mass was prepared. A sheet was prepared by a paper machine of the Tappi type and dried by a cylinder drier at 110°C, and a separator paper for batteries having a unit weight of 31 g/m$^2$ was prepared.
(2) Using the separator paper for batteries obtained in (1) described above, a separator having a cup shape (a cylindrical shape having a bottom) of the size matching the size of the alkaline dry cell of size AA was prepared. An alkaline dry cell of size AA was prepared using the prepared separator, and the discharging property of the prepared alkaline dry cell was evaluated. The result is shown in Table 3 in the following.

《Examples 2 to 5》

(1) Materials for paper making in the slurry form having a concentration of solid substances of 0.1% by mass were prepared using polyamides $a_2$ to $a_5$ obtained in Preparation Examples 2 to 5, respectively, each in a relative amount shown in Table 3 in place of polyamide fiber $a_1$ and the cellulose fiber and the fiber-shaped binder shown in Table 3 in relative amounts also shown in Table 3, and separator papers for batteries shown in Table 3 were prepared in accordance with the same procedures as those conducted in Example 1 (1).

(2) Using the separator papers for batteries obtained in (1) described above, separators having a cup shape of the size matching the size of the alkaline dry cell of size AA were prepared. Alkaline dry cells of size AA were prepared using the prepared separators, and the discharging property of the prepared alkaline dry cells was evaluated. The results are shown in Table 3 in the following.

《Comparative Example 1》

(1) A material for paper making in the slurry form having a concentration of solid substances of 0.1% by mass was prepared using polyamide $a_6$ obtained in Preparation Example 6 in a relative amount shown in Table 3 in place of polyamide fiber $a_1$ and the cellulose fiber and the fiber-shaped binder shown in Table 4 in relative amounts also shown in Table 4, and a separator paper for batteries shown in Table 4 was prepared in accordance with the same procedures as those conducted in Example 1 (1).

(2) Using the separator paper for batteries obtained in (1) described above, a separator having a cup shape of the size matching the size of the alkaline dry cell of size AA was prepared. An alkaline dry cell of size AA was prepared using the prepared separator, and the discharging property of the prepared alkaline dry cell was evaluated. The result is shown in Table 4 in the following.

《Comparative Example 2》

(1) To 99,000 parts by mass of water at a temperature of 18°C, 25 parts by mass of a polyvinyl alcohol fiber (VINYLON) (manufactured by KURARAY Co., Ltd.; "VPB 083×3"; the size of the single fiber = 0.8 dtex; the length of the fiber: 3 mm; the temperature of dissolution in water: 100°C or higher) and 60 parts by mass of cellulose fiber $b_4$ as the main fiber components and 15 parts by mass of fiber-shaped binder $c_1$ were added and uniformly mixed under stirring, and a material for paper making in the slurry form having a content of solid substances of 0.1% by mass was prepared. A sheet was prepared by a paper machine of the Tappi type and dried by a cylinder drier at 110°C, and a separator paper for batteries having a unit weight of 31 g/m$^2$ was prepared.

(2) Using the separator paper for batteries obtained in (1) described above, a separator having a cup shape of the size matching the size of the alkaline dry cell of size AA was prepared. An alkaline dry cell of size AA was prepared using the prepared separator, and the discharging property of the prepared alkaline dry cell was evaluated. The result is shown in Table 4 in the following.

《Comparative Examples 3 to 5》

(1) Materials for paper making in the slurry form having a concentration of solid substances of 0.1% by mass were prepared using polyamides $a_7$ to $a_9$ obtained in Preparation Examples 7 to 9, respectively, each in a relative amount shown in Table 4 in place of polyamide fiber $a_1$ and the cellulose fiber and the fiber-shaped binder shown in Table 4 in relative amounts also shown in Table 4, and separator papers for batteries shown in Table 4 were prepared in accordance with the same procedures as those conducted in Example 1 (1).

(2) Using the separator papers for batteries obtained in (1) described above, separators having a cup shape of the size matching the size of the alkaline dry cell of size AA were prepared. Alkaline dry cells of size AA were prepared using the prepared separators, and the discharging property of the prepared alkaline dry cells was evaluated. The results are shown in Table 4 in the following.

Table 3

| Example | | 1 | 2 | 3 | 4 | 5 |
|---|---|---|---|---|---|---|
| [Composition of separator] | | | | | | |
| Main component fiber | | | | | | |
| polyamide fiber | | | | | | |
| type<br>amount (% by mass) | | $a_1$<br>20 | $a_2$<br>30 | $a_3$<br>40 | $a_4$<br>65 | $a_5$<br>50 |
| cellulose fiber | | | | | | |
| type<br>amount (% by mole) | | $b_1$<br>70 | $b_1$<br>60 | $b_1$<br>50 | $b_2$<br>28 | $b_1$<br>35 |
| polyvinyl alcohol fiber | | | | | | |
| type<br>amount (% by mass) | | -<br>- | -<br>- | -<br>- | -<br>- | -<br>- |
| Fiber-shaped binder | | | | | | |
| type<br>amount (% by mass) | | $c_1$<br>10 | $c_1$<br>10 | $c_1$<br>10 | $c_2$<br>7 | $c_3$<br>15 |
| [Discharging property of alkaline battery] | | | | | | |
| immediately after being prepared | | 98 | 98 | 99 | 103 | 100 |
| after being kept at 25°C for 1 week | | 97 | 97 | 97 | 101 | 98 |
| after being kept at 80°C for 3 days | | 92 | 92 | 93 | 95 | 94 |

Table 4

| Comparative Example | 1 | 2 | 3 | 4 | 5 |
|---|---|---|---|---|---|
| [Composition of separator] | | | | | |
| Main component fiber | | | | | |
| polyamide fiber | | | | | |
| type<br>amount (% by mass) | $a_6$<br>30 | -<br>- | $a_9$<br>30 | $a_7$<br>30 | $a_8$<br>30 |
| cellulose fiber | | | | | |
| type<br>amount (% by mole) | $b_3$<br>60 | $b_4$<br>60 | $b_3$<br>60 | $b_3$<br>60 | $b_3$<br>60 |
| polyvinyl alcohol fiber | | | | | |
| type<br>amount (% by mass) | -<br>- | vinylon[1]<br>25 | -<br>- | -<br>- | -<br>- |
| Fiber-shaped binder | | | | | |
| type<br>amount (% by mass) | $c_1$<br>10 | $c_1$<br>15 | $c_1$<br>10 | $c_1$<br>10 | $c_1$<br>10 |
| [Discharging property of alkaline battery] | | | | | |
| immediately after being prepared | 99 | 100 | 98 | 97 | 99 |

1): Polyvinyl alcohol fiber (manufactured by KURARAY Co., Ltd.; "VINYLON") (the size of the single fiber: 0.8 dtex; the length of the single fiber: 3 mm; the temperature of dissolution in water: 70°C)

Table 4 (continued)

| Comparative Example | 1 | 2 | 3 | 4 | 5 |
|---|---|---|---|---|---|
| [Discharging property of alkaline battery] | | | | | |
| after being kept at 25°C for 1 week | 97 | 98 | 99 | 96 | 96 |
| after being kept at 80°C for 3 days | 72 | 56 | 64 | 69 | 68 |

As shown in Tables 3 and 4, the alkaline batteries of Examples 1 to 5 exhibited remarkably improved discharging properties after being kept at the high temperature of 80°C since the separators used in the alkaline batteries were formed with the polyamide fibers and the solvent-spun cellulose fiber (TENCEL) as the main component fibers, wherein the polyamide fibers were formed with the polyamides composed of terephthalic acid unit in an amount of 60% by mole or more of the dicarboxylic acid unit and 1,9-nonanediamine unit in an amount of 40% by mole or more of the diamine unit, and in particular, the polyamides composed of terephthalic acid unit in an amount of 60% by mole or more of the dicarboxylic acid unit, 1,9-nonanediamine unit in an amount of 40% by mole or more of the diamine unit and the 2-methyl-1,8-octanediamine unit in combination with the 1,9-nonanediamine unit, and these main component fibers were used in relative amounts in the range of 20:80 to 80:20 (the ratio by mass). It is shown by the above results that the separators for alkaline batteries of the present invention prepared in Examples 1 to 5 exhibited remarkably excellent properties for separation in storage at high temperatures.

In contrast, the alkaline battery in Comparative Example 1 exhibited the discharging property after being kept at a high temperature of 80°C inferior to that of the alkaline batteries of Examples 1 to 5 since the cellulose fiber was not the solvent-spun cellulose fiber but the mercerized wood pulp although the separator for alkaline batteries was formed with the polyamide fiber and the cellulose fiber, wherein the polyamide fiber was formed with the polyamide composed of terephthalic acid unit in an amount of 60% by mole or more of the dicarboxylic acid unit, 1,9-nonanediamine unit in an amount of 40% by mole or more of the diamine unit and the 2-methyl-1,8-octanediamine unit in combination with the 1,9-nonanediamine unit.

The alkaline battery in Comparative Example 2 exhibited the discharging property after being kept at a high temperature of 80°C markedly inferior to that of the alkaline batteries of Examples 1 to 5 since the separator was formed with the polyvinyl alcohol fiber and the cellulose fiber as the main component fibers.

The alkaline battery of Comparative Example 3 exhibited the discharging property after being kept at a high temperature of 80°C markedly inferior to that of the alkaline batteries of Examples 1 to 5 since the polyamide forming the polyamide fiber in the separator for alkaline batteries was composed of the adipic acid unit, i.e., an aliphatic dicarboxylic acid unit, and the hexamethylenediamine unit, and the cellulose fiber was a cellulose fiber other than the solvent-spun cellulose fiber.

The alkaline battery of Comparative Example 4 exhibited the discharging property after being kept at a high temperature of 80°C inferior to that of the alkaline batteries of Examples 1 to 5 since, in the polyamide forming the polyamide fiber in the separator for alkaline batteries, the relative amount of the terephthalic acid unit was 40% by mole which was less than 60% by mole, and the cellulose fiber was a cellulose fiber other than the solvent-spun cellulose fiber.

The alkaline battery of Comparative Example 5 exhibited the discharging property after being kept at a high temperature of 80°C inferior to that of the alkaline batteries of Examples 1 to 5 since, in the polyamide forming the polyamide fiber in the separator for alkaline batteries, the relative amount of the 1,9-nonanediamine unit was 20% by mole which was less than 40% by mole, and the cellulose fiber was a cellulose fiber other than the solvent-spun cellulose fiber.

INDUSTRIAL APPLICABILITY

Since the separator for alkaline batteries of the present invention is formed by using the specific polyamide fiber described above and the specific cellulose fiber (the solvent-spun cellulose fiber) as the main component fibers, the separator for alkaline batteries of the present invention exhibits not only the excellent property for absorbing the alkaline electrolyte (the excellent property for holding liquids) but also the suppressed degradation by oxidation even when the separator is used for an alkaline battery using, as the positive electrode mix, manganese dioxide added with an agent having a great oxidizing ability for enhancing the discharging property under a great load such as nickel oxyhydroxide and excellently maintains the function as the separator even when the separator is exposed to high temperatures for a long time, for example, even when the separator is stored at high temperatures. Therefore, the alkaline battery using the separator for alkaline batteries of the present invention can maintain the great capacity of the positive electrode (the capacity of the battery) for a long time and can be used for various types of portable information instruments requiring the excellent discharging property under a great load such as digital cameras.

**Claims**

1. A separator for alkaline batteries (i) which comprises a non-woven fiber structural material comprising a polyamide fiber and a cellulose fiber as main component fibers, wherein

   (ii) the polyamide fiber is a fiber formed with a polyamide constituted with a dicarboxylic acid unit and a diamine unit, the dicarboxylic acid unit comprising 60% by mole or more and 100% by mole or less of a terephthalic acid unit and the diamine unit comprising 40% by mole or more and 99% by mole or less of a 1,9-nonanediamine unit;

   (iii) the cellulose fiber is a solvent-spun cellulose fiber produced by using a spinning solution prepared by dissolving cellulose into a non-reactive solvent; and

   (iv) a ratio of an amount by mass of the polyamide fiber to an amount by mass of the cellulose fiber in the non-woven fiber structural material is in a range of 20:80 to 80:20.

2. A separator for alkaline batteries according to Claim 1, wherein the polyamide forming the polyamide fiber comprises a 2-methyl-1,8-octanediamine unit in combination with the 1,9-nonanediamine unit, and a ratio of an amount by mole of the 1,9-nonanediamine unit to an amount by mole of the 2-methyl-1,8-octanediamine unit in the polyamide is in a range of 99:1 to 40:60.

3. A separator for alkaline batteries according to any one of Claims 1 and 2, wherein the polyamide forming the polyamide fiber has a fraction of sealed chain ends of 10% or greater.

4. A separator for alkaline batteries according to any one of Claims 1 to 3, wherein a size of a single fiber in the polyamide fiber is in a range of 0.01 to 1.0 dtex.

5. A separator for alkaline batteries according to any one of Claims 1 to 4, wherein the cellulose fiber is a solvent-spun cellulose fiber obtained by dry-wet spinning in water of a spinning solution prepared by dissolving cellulose into an amine oxide.

6. A separator for alkaline batteries according to any one of Claims 1 to 5, wherein the main component fibers are adhered together with a fiber-shaped binder.

7. A separator for alkaline batteries according to Claim 6, wherein an amount of the fiber-shaped binder is in a range of 3 to 30% by mass based on a total of an amount by mass of the main component fibers and an amount by mass the fiber-shaped binder.

8. An alkaline battery which is equipped with a separator for alkaline batteries described in any one of Claims 1 to 7.

## INTERNATIONAL SEARCH REPORT

| | International application No. |
|---|---|
| | PCT/JP03/11354 |

**A. CLASSIFICATION OF SUBJECT MATTER**
Int.Cl⁷ H01M2/16, D21H13/08, D21H13/26

According to International Patent Classification (IPC) or to both national classification and IPC

**B. FIELDS SEARCHED**

Minimum documentation searched (classification system followed by classification symbols)
Int.Cl⁷ H01M2/16, D21H13/08, D21H13/26

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-17524 A (Kuraray Co., Ltd.), 18 January, 2000 (18.01.00), Claims 1 to 4; Par. Nos. [0006] to [0010], [0016] (Family: none) | 1-8 |
| A | JP 2002-151041 A (Kuraray Co., Ltd.), 24 May, 2002 (24.05.02), Claims 1 to 5; Par. Nos. [0014] to [0015], [0024], [0028] (Family: none) | 1-8 |
| A | JP 2002-151358 A (Kuraray Co., Ltd.), 24 May, 2002 (24.05.02), Claims 1 to 5; Par. Nos. [0006] to [0007], [0020] (Family: none) | 1-8 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 08 December, 2003 (08.12.03) | 24 December, 2003 (24.12.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

21

**INTERNATIONAL SEARCH REPORT**

| International application No. |
|---|
| PCT/JP03/11354 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 9-259856 A (Kuraray Co., Ltd.), 03 October, 1997 (03.10.97), Claims 1 to 3; Par. Nos. [0010] to [0011], [0023] [0031] (Family: none) | 1-8 |

Form PCT/ISA/210 (continuation of second sheet) (July 1998)